# EUROPÄISCHE PATENTSCHRIFT

(11) **EP 2 462 343 B1**
(45) Veröffentlichungstag und Bekanntmachung des Hinweises auf die Patenterteilung: **04.06.2014**
(21) Anmeldenummer: 10747144.3
(22) Anmeldetag: 05.08.2010
(51) Int. Cl.: F03D 3/06

(54) **WINDRAD**
WIND WHEEL
ROUE ÉOLIENNE

(30) Priorität: 07.08.2009 AT 12512009
(43) Veröffentlichungstag der Anmeldung: 13.06.2012
(73) Patentinhaber: Freller, Walter, 5310 Mondsee (AT)
(72) Erfinder: Freller, Walter, 5310 Mondsee (AT)
(74) Vertreter: Hübscher, Helmut
(86) Internationale Anmeldenummer: PCT/AT2010/000284
(87) Internationale Veröffentlichungsnummer: WO 2011/014899

(56) Entgegenhaltungen:
- DE-A1- 3 527 811
- DE-U1-202008 014 231

## Beschreibung

### Technisches Gebiet

Die Erfindung bezieht sich auf ein Windrad mit einer vertikalen Drehachse, umfassend einen Rotor mit einer vertikalen Welle und mit wenigstens einem diametral zur Welle verlaufenden, mit Flügeln beidseits der Welle versehenen Tragarm, der um seine Längsachse drehbar gegenüber der Welle gelagert ist, wobei die Flügel beidseits der Welle gegeneinander um die Längsachse des Tragarms winkelversetzt angeordnet sind und einen Flächenschwerpunkt ihrer Windangriffsflächen aufweisen, der in einem radialen Abstand von der Längsachse des Tragarms liegt.

### Stand der Technik

Windräder mit vertikaler Drehachse weisen einen Umlaufbereich in und einen gegen die Windrichtung auf, was besonderer Maßnahmen bedarf, um im Umlaufbereich gegen den Wind das in diesem Bereich der Umlaufrichtung entgegengesetzte Windmoment möglichst klein zu halten. Zu diesem Zweck ist es bekannt, das Windrad mit Flügeln auszurüsten, die ein Strömungsprofil bilden und um zur vertikalen Drehachse parallele Achsen verstellt werden können. Mit Hilfe einer Steuereinrichtung werden die Flügel in Abhängigkeit von ihrer Lage entlang der Umlaufbahn so gegenüber dem Wind angestellt, dass sich durch die Windanströmung ein für den Vortrieb des Windrads vorteilhaftes Drehmoment ergibt. Nachteilig bei diesen bekannten Windrädern ist vor allem der durch die Stelltriebe für die Flügel und die Ansteuerung dieser Stelltriebe verbundene Aufwand.

Um einen solchen Steuerungsaufwand zu vermeiden, ist es bereits bekannt (WO 89/11595 A2 oder DE-U-20-2008 014 231), die Tragarme für die Flügel um ihre Längsachse drehbar zu lagern und die Flügel beidseits jeder Welle gegeneinander um die Längsachse des Tragarms winkelversetzt so anzuordnen, dass der Flächenschwerpunkt der Windangriffsflächen dieser Flügel in einem radialen Abstand von der Längsachse des Tragarms liegt. Zufolge dieser Maßnahmen nehmen die nicht durch einen Wind belasteten Flügel des Rotors aufgrund der freien Drehbarkeit des sie aufnehmenden Tragarms eine schwerkraftbedingte Ruhestellung ein, in der sie in einer Projektion in Richtung der Längsachse ihres Tragarms einander bezüglich einer durch die Drehachse des Windrads und die Längsachse des Tragarms gehenden Ebene symmetrisch gegenüberliegen, weil sie wegen des radialen Abstands ihrer Flächenschwerpunkte von der Längsachse des Tragarms gegensinnige Gewichtsmomente um die Tragarmachse bedingen. Die mit einer Windbelastung auftretenden Windmomente bezüglich der Längsachse des Tragarms wirken auf den Flügel im Umlaufbereich mit dem Wind gegensinnig und auf den Flügel im Umlaufbereich gegen den Wind gleichsinnig zum jeweiligen Gewichtsmoment, und zwar mit der Folge, dass die Flügel mit dem Tragarm um dessen Längsachse so gedreht werden, dass sie im Umlaufbereich mit dem Wind in den Wind und im Umlaufbereich gegen den Wind aus dem Wind verschwenkt werden, wodurch die notwendige Umstellung der Flügel zwischen den beiden bezüglich der Windrichtung gegensinnigen Umlaufbereichen ohne äußeren Steuerungsaufwand selbständig abläuft. Beim Durchgang des Tragarms durch die Windrichtung während seiner Drehung um die vertikale Drehachse schwenken die miteinander durch den Tragarm verbundenen Flügel um, sodass der aus dem Gegenwindbereich in den Mitwindbereich umlaufende Flügel in den Wind und der gegenüberliegende, in den Gegenwindbereich gelangende Flügel aufgrund der bezüglich der Tragarmachse drehfesten Verbindung der beiden Flügel aus dem Wind geschwenkt wird. Die bezüglich der Drehung des Tragarms feste Verbindung der Flügel mit dem zugehörigen Tragarm ermöglicht im Zusammenhang mit der gegenseitigen Winkelversetzung der Flügel in Bezug auf die Längsachse des Tragarms beim Umlaufen des Rotors ein Verschwenken der Flügel um die Tragarmachse in und aus dem Wind, doch werden die Flügel entlang ihrer Umlaufbahn um die vertikale Drehachse des Windrads ebenfalls in und aus dem Wind gedreht, und zwar mit dem Nachteil, dass insbesondere im Übergangsbereich zwischen dem Mit- und dem Gegenwindbereich der Umlaufbahn das Vortriebsmoment nicht vorteilhaft genützt werden kann.

### Darstellung der Erfindung

Der Erfindung liegt somit die Aufgabe zugrunde, ein Windrad der eingangs geschilderten Art mit vergleichsweise einfachen konstruktiven Mitteln so auszugestalten, dass insbesondere im Übergangsbereich zwischen dem Mit- und dem Gegenwindbereich der Umlaufbahn ein entsprechendes Vortriebsmoment sichergestellt werden kann.

Die Erfindung löst die gestellte Aufgabe dadurch, dass die Flügel um eine zum radialen Abstand des Flächenschwerpunkts und zur Längsachse des Tragarms senkrechte Achse drehbar auf ihrem Tragarm gelagert sind.

Zufolge dieser Maßnahme können die einzelnen Flügel durch den Wind selbst in einer Stellung gehalten werden, die eine gute Ausnützung der Windangriffsflächen erlaubt, weil die Flügel auf der Mitwindseite der Umlaufbahn durch den Wind gegensinnig zum Rotor um ihre Anlenkachsen so gedreht werden, dass sie in Bezug auf die Drehachse des Rotors parallel zu sich selbst entlang der Umlaufbahn bewegt werden, aber selbstverständlich die Schwenkbewegung des Tragarms um seine Längsachse mitmachen. Aufgrund dieser zusätzlichen, zum Rotor gegensinnigen Drehung werden die Flügel unabhängig von der Drehstellung des Rotors quer zur Windangriffsfläche angeströmt, was auf der Mitwindseite der Umlaufbahn vorteilhafte Beaufschlagungsbedingungen für das Windrad mit sich bringt.

Zur frei drehbaren Lagerung der Flügel um eine zum radialen Abstand des Flächenschwerpunkts und zur Längsachse des Tragarms senkrechte Achse können die Tragarme an ihren Enden gegeneinander winkelversetzte Lagergabeln aufweisen, in denen die Flügel beispielsweise über Achsstummel gelagert sind. Trotz der freien Drehbarkeit der Flügel um diese Achse bleibt die drehfeste Verbindung der Flügel gegenüber der Längsachse der Tragarme als Voraussetzung für das Verstellen der Flügel mit den Tragarmen bestehen. Eine andere Möglichkeit der Lagerung der Flügel ergibt sich, wenn die Flügel zwei beidseits der Tragarme liegende Abschnitte aufweisen, die mit Hilfe von Haltebügeln auf einer gemeinsamen, die drehfeste Verbindung der Flügelabschnitte sicherstellenden Achse gelagert sind.

### Kurze Beschreibung der Zeichnung

In der Zeichnung ist der Erfindungsgegenstand beispielsweise dargestellt. Es zeigen
- Fig. 1: ein erfindungsgemäßes Windrad in einer schematischen Seitenansicht in Richtung der Längsachse eines Tragarms ohne Windbelastung,
- Fig. 2: das Windrad nach der Fig. 1 in einer Draufsicht mit Windbelastung und
- Fig. 3: eine Konstruktionsvariante eines erfindungsgemäßen Windrads in einer der Fig. 1 entsprechenden Darstellung.

### Weg zur Ausführung der Erfindung

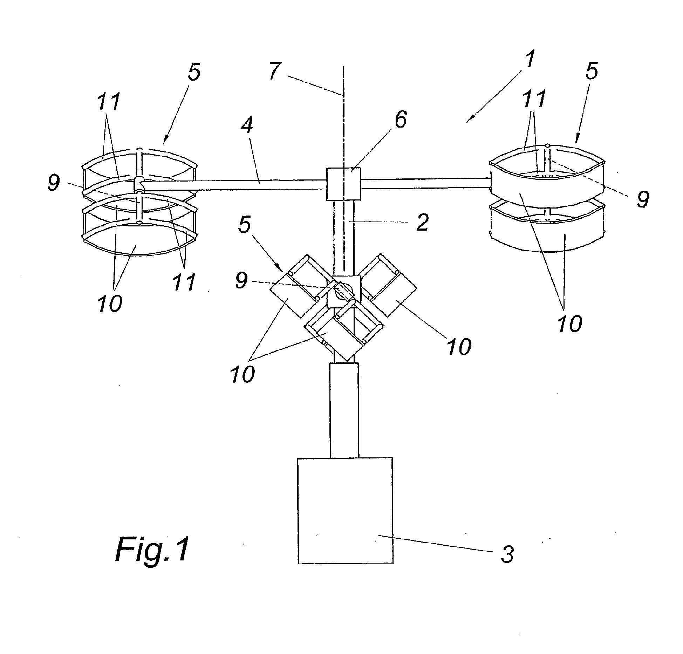

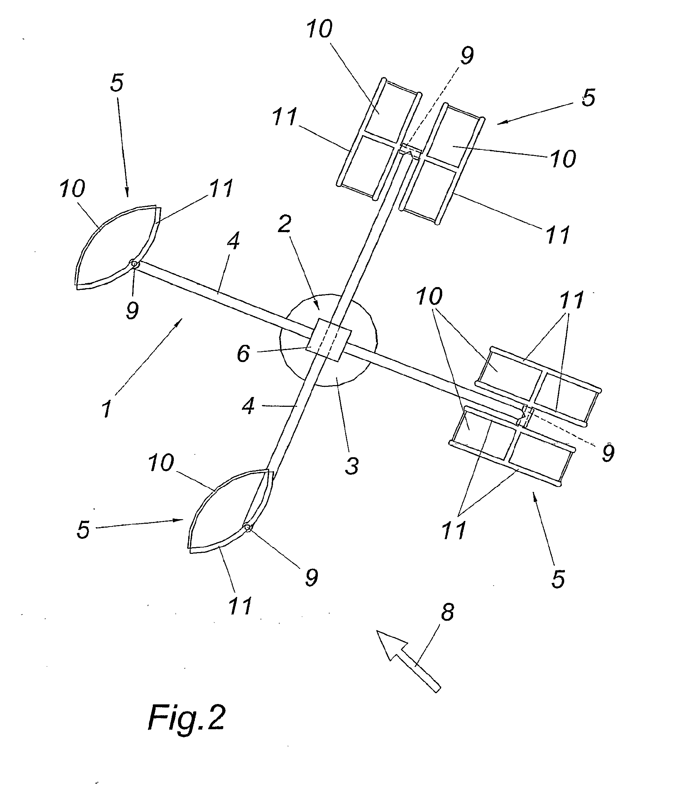

Gemäß dem Ausführungsbeispiel nach den Fig. 1 und 2 weist das Windrad einen Rotor 1 mit einer vertikalen Welle 2 auf, die in einem Gehäuse 3 drehbar gelagert ist, das vorteilhaft einen mit Hilfe des Windrads antreibbaren Generator umfasst. Der Rotor 1 ist mit drehbar gegenüber der Welle 2 gelagerten Tragarmen 4 für Flügel 5 versehen. Die Anordnung ist dabei so getroffen, dass die Tragarme 4 auf der Welle 2 angeordnete Lagerkörper 6 durchsetzen. Da es lediglich auf die drehbare Lagerung der Tragarme 4 um ihre Längsachsen ankommt, können für die drehbare Lagerung der Tragarme 4 gegenüber der Welle 2 unterschiedliche konstruktive Ausführungsformen zum Einsatz kommen.

Die Flügel 5 auf einander bezüglich der Welle 2 gegenüberliegenden Seiten der Tragarme 4 sind in Bezug auf die Längsachse der Tragarme 4 winkelversetzt angeordnet, wie dies insbesondere der Fig. 1 im Bereich des unteren Tragarms 4 entnommen werden kann, der in Ansichtsrichtung verläuft. In dieser Darstellung, die einer Projektion auf eine zum Tragarm 4 senkrechte Ebene entspricht, wird auch ersichtlich, dass die schalenartigen, profilierten Flügel 5 eine Windangriffsfläche bilden, deren Flächenschwerpunkt in einem radialen Abstand von der Längsachse der Tragarme 4 liegt. Aufgrund der bezüglich der Tragarme 4 exzentrischen Anordnung der Flügel 5 und ihres gegenseitigen Winkelabstands, der im dargestellten Ausführungsbeispiel 90° beträgt, was jedoch keinesfalls zwingend ist, nehmen die Flügel 5 ohne Windbelastung in einer Projektion in Richtung der Tragarme 4 zufolge der freien Drehbarkeit der Tragarme 4 eine bezüglich einer durch die Drehachse 7 und die Längsachse des jeweiligen Tragarms 4 verlaufenden Ebene symmetrische Lage ein. Diese schwerkraftbedingte Gleichgewichtslage wird bei einer Windbelastung aufgehoben, weil durch die Windbelastung die Flügel 5 auf den gegenüberliegenden Seiten zufolge der Lage ihrer Flächenschwerpunkte gegenüber dem Tragarm 4 mit einem gleichsinnigen Drehmoment beaufschlagt werden, das den in Windrichtung dem Tragarm 4 nachgeordneten Flügel in den Wind, den dem Tragarm 4 vorgeordneten Flügel jedoch aus dem Wind dreht, wie dies in der Fig. 2 dargestellt ist. Dies bedeutet, dass im Umlaufbereich des Rotors 1 mit dem Wind die Flügel 5 eine entsprechend große Windangriffsfläche, im Umlaufbereich gegen den Wind jedoch nur eine kleine Angriffsfläche bieten. Beim Durchgang der Tragarme 4 durch die in Fig. 2 angedeutete Windrichtung 8 werden daher die Tragarme 4 stets so gedreht, dass die aus dem Gegenwindbereich austretenden Flügel 5 in den Wind und die gegenüberliegenden aus dem Mitwindbereich in den Gegenwindbereich gelangenden Flügel 5 aus dem Wind gedreht werden.

Die Flügel 5 sind um Achsen 9 drehbar auf den Tragarmen 4 gelagert. Die Anordnung ist dabei so getroffen, dass die Achse 9 jeweils senkrecht zum radialen Abstand des Flächenschwerpunkts der Windangriffsfläche und senkrecht zur Längsachse des Tragarms 4 verläuft. Durch diese Anordnung wird eine Selbstausrichtung der Flügel 5 gegenüber dem Wind im Umlaufbereich des Rotors 1 mit dem Wind erreicht, ohne das selbständige Verschwenken der Flügel 5 in und aus dem Wind zu gefährden. Wie den Fig. 1 und 2 entnommen werden kann, sind die Flügel 5 jeweils in zwei Abschnitte 10 unterteilt, die beidseits der Tragarme 4 liegen und über die Achsen 9 miteinander drehfest verbunden sind, sodass sich die Flügel 5 unbehindert durch ihre Tragarme um 360° um die Achsen 9 drehen können. Aufgrund der Ausrichtung der Achsen 9 wird eine Drehung der Flügel 5 um die Längsachse der Tragarme 4 gegenüber den Tragarmen 4 verhindert, sodass die selbständige Umsteuerung durch das Hinund Herdrehen der Tragarme 4 bei ihrem Durchgang durch den Wind nicht gefährdet wird. Die Halterung der Flügelabschnitte 10 der Flügel 5 auf der gemeinsamen Achse 9 erfolgt über Haltebügel 11.

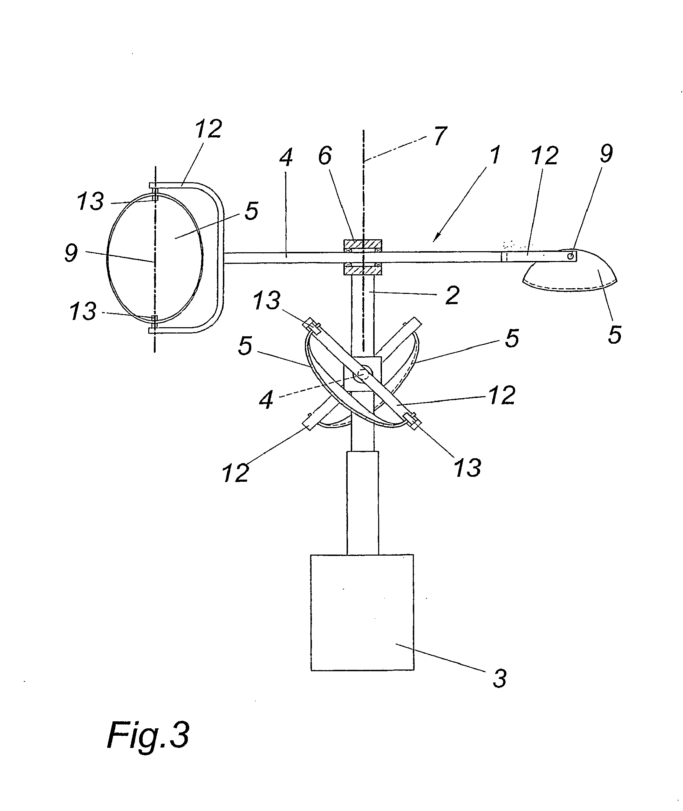

In der Fig. 3 ist eine bezüglich der Fig. 1 und 2 einfachere Konstruktion für ein Windrad mit um Achsen 9 gegenüber den Tragarmen 4 frei drehbar gelagerten Flügeln 5 dargestellt. Die Tragarme 4 tragen nämlich an ihren Enden gegeneinander winkelversetzte Lagergabeln 12, in denen die Flügel 5 über die Achse 9 bildende Achsstummel 13 gelagert sind, sodass die Achse 9 sowohl senkrecht auf den radialen Abstand des Flächenschwerpunkts der Windangriffsfläche des jeweiligen Flügels 5 vom Tragarm 4 als auch senkrecht zur Längsachse des jeweiligen Tragarms 4 steht. Auch bei dieser Anordnung ergibt sich für die Flügel 5 eine drehfeste Verbindung bezüglich der Längsachse der Tragarme 4, was eine Voraussetzung für das Verstellen der Flügel 5 mit den Tragarmen 4 in den Lagerkörpern 6 darstellt, um beim Durchgang der Tragarme 4 durch den Wind während der Drehung des Rotors 1 um seine Drehachse 7 die Flügel 5 im Umlaufbereich mit dem Wind in den Wind und im Umlaufbereich gegen den Wind aus dem Wind zu drehen.

## Patentansprüche

1. Windrad mit einer vertikalen Drehachse (7), umfassend einen Rotor (1) mit einer vertikalen Welle (2) und mit wenigstens einem diametral zur Welle (2) verlaufenden, mit Flügeln (5) beidseits der Welle (2) versehenen Tragarm (4), der um seine Längsachse drehbar gegenüber der Welle (2) gelagert ist, wobei die Flügel (5) beidseits der Welle (2) gegeneinander um die Längsachse des Tragarms (4) winkelversetzt angeordnet sind und einen Flächenschwerpunkt ihrer Windangriffsflächen aufweisen, der in einem radialen Abstand von der Längsachse des Tragarms (4) liegt, **dadurch gekennzeichnet, dass** die Flügel (5) um eine zum radialen Abstand des Flächenschwerpunkts und zur Längsachse des Tragarms (4) senkrechte Achse (9) drehbar auf ihrem Tragarm (4) gelagert sind.

2. Windrad nach Anspruch 1, **dadurch gekennzeichnet, dass** die Tragarme (4) an ihren Enden gegeneinander winkelversetzte Lagergabeln (12) aufweisen, in denen die Flügel (5) drehbar gelagert sind.

3. Windrad nach Anspruch 1, **dadurch gekennzeichnet, dass** die Flügel (5) in zwei beidseits der Tragarme (4) liegende und über die Achsen (9) miteinander drehfest verbundene Abschnitte (10) unterteilt sind.

4. Windrad nach Anspruch 3, **dadurch gekennzeichnet, dass** die Flügelabschnitte (10) der Flügel (5) über Haltebügel (11) mit der gemeinsamen Achse (9) verbunden sind.

## Claims

1. Wind wheel having a vertical axis of rotation (7), comprising a rotor (1) with a vertical shaft (2) and with at least one support arm (4) which extends diametrically to the shaft (2), is provided with blades (5) on both sides of the shaft (2) and is mounted to be rotatable about its longitudinal axis with respect to the shaft (2), wherein the blades (5) on both sides of the shaft (2) are arranged angularly offset from each other about the longitudinal axis of the support arm (4) and have a centre of area of their areas exposed to wind which lies radially spaced apart from the longitudinal axis of the support arm (4), **characterised in that** the blades (5) are mounted on the support arm (4) thereof to be rotatable about an axis (9) perpendicular to the radial spacing of the centre of area and to the longitudinal axis of the support arm (4).

2. Wind wheel as claimed in claim 1, **characterised in that**, at their ends, the support arms (4) comprise bearing forks (12) which are angularly offset from each other and in which the blades (5) are rotatably mounted.

3. Wind wheel as claimed in claim 1, **characterised in that** the blades (5) are divided into two sections (10) which are located on both sides of the support arms (4) and are connected to each other in a non-rotatable manner via the axes (9).

4. Wind wheel as claimed in claim 3, **characterised in that** the blade sections (10) of the blades (5) are connected to the common axis (9) via holding brackets (11).

## Revendications

1. Roue éolienne avec un axe de rotation vertical (7), comprenant un rotor (1) avec un arbre vertical (2) et avec au moins un bras porteur (4) s'étendant diamétralement par rapport à l'arbre (2), et muni d'ailettes (5) situées des deux côtés de l'arbre (2) et qui est monté rotatif sur son axe longitudinal par rapport à l'arbre (2), les ailettes (5) situées des deux côtés de l'arbre (2) étant disposées décalées angulairement l'une par rapport à l'autre autour de l'axe longitudinal du bras porteur (4) et présentant un centre de gravité des surfaces exposées au vent qui est situé à une distance radiale de l'axe longitudinal du bras porteur (4), **caractérisée en ce que** les ailettes (5) sont montées rotatives sur leur bras porteur (4) autour d'un axe (9) perpendiculaire à l'écartement radial du centre de gravité et à l'axe longitudinal du bras porteur (4).

2. Roue éolienne selon la revendication 1, **caractérisée en ce que** les bras porteurs (4) présentent au niveau de leurs extrémités des fourches de support (12) décalées angulairement les unes par rapport aux autres, dans lesquelles les ailettes (5) sont montées rotatives.

3. Roue éolienne selon la revendication 1, **caractérisée en ce que** les ailettes (5) sont divisées en deux sections (10) reliées fixement ensemble par les axes (9) et situées des deux côtés des bras porteurs (4).

4. Roue éolienne selon la revendication 3, **caractérisée en ce que** les sections d'ailette (10) des ailettes (5) sont reliées avec l'axe (9) commun par le biais d'étrier de retenue (11).
